# EUROPEAN PATENT APPLICATION

(11) **EP 4 712 036 A1**
(43) Date of publication of application: **18.03.2026**
(21) Application number: 24199689.1
(22) Date of filing: 11.09.2024
(51) Int. Cl.: G06V 10/143, G06V 10/774, G06V 10/94, G06V 20/80, G06V 20/00, G06V 30/224, G06V 10/778

(54) **PHYSICAL MARKERS FOR LABELLING**

(71) Applicant: HONDA MOTOR CO., LTD., Tokyo 105-8404 (JP)
(72) Inventor: Mathias, Franzius, 63073 Offenbach am Main (DE)
(74) Representative: Beder, Jens

(57) **Abstract**

Methods and the systems for generating image data for generating training information, and for generating training information for an automated image analysis related to a local feature in an image. A method comprises applying at least one physical marker device adjacent to the local feature of an object. The method then acquires with at least one camera sensor, a plurality of images of the object and stores the plurality of images. A processor detects the at least one physical marker device in at least one image of the acquired plurality of images. The processor computes, for each detected at least one physical marker device, a region of interest in the at least one image based on predetermined relative location information associated with the at least one physical marker device. The processor then generates mask information based on the computed region of interest and stores the generated mask information associated with the at least one image as training information; and generates the classification information for detecting, segmenting, classifying, identifying, or determining a regression for the local feature by training a model using the stored training information.

## Description

The invention is in the field of supervised machine learning, in particular deep learning using training data, and computer vision. In particular, the invention concerns techniques for generating labeled training data for learning to classify local features of objects in image data. Specifically, the invention concerns a method and a system for generating classification information for classifying a local feature of a object in an image.

Detecting, classifying, identifying, and tracking of objects and in particular physical features that are parts of objects, e.g. features present locally on surfaces of objects in images, is a task in the field of computer vision that requires a solution for the benefit for a wide range of technical applications.

For example, US 10,713,769 B2 discloses methods for active learning for training a defect classifier. The method acquires images, selects data points in the images, acquires labels for the selected one or more data points, and generates a set of labeled data including the selected data points and the acquired label data, and trains the defect classifier using the set of labeled data. Deep learning as a state-of-the-art solution to supervised learning requires using a sufficient amount of labeled data, e.g. including data samples in the order of hundreds or even millions in the training data depending on the application complexity. Therefore, supervised machine learning, e.g. deep learning, requires large sets of labeled training data for training the models of the classifier. An established approach of generating labeled training data includes a human expert visually inspecting prerecorded images of the physical images and manually adding labels to the inspected images, e.g. by drawing boxes around relevant image regions in the inspected images using a labeling tool. The human expert stores the labeled images as part of the set of training data.

Nevertheless, visually inspecting each image and manually adding labels to the inspected images is time-consuming, requires a significant amount of training with the utilized labeling software, and is therefore costly.

Furthermore, the known approaches fail in providing large sets of training data necessary for machine learning of models that often require thousands or millions of individual samples of training data in order to train a model that provides the capability of classifying, and tracking of parts of objects with high reliability. Large sets of training data are in particular necessary in applications, which require classifying small visual features on surfaces of objects that are reflective or transparent, or in which the background and the lighting conditions significantly influence visual appearance.

In a different application field, US 10,169,678 B1 concerns generating training data for training models, e.g., perception models for identifying regions of interest in images, e.g., identifying objects or structures in images. In particular, perception models enable to process image data obtained from a perception component that processes data generated by sensors. The perception component identifies, classifies and/or tracks objects within an environment; perception functions include (1) segmentation, (2) classification, and (3) tracking over time and image frames, performed by perception models trained by machine learning, in particular machine learning using real world image data and/or image data generated in a simulated environment. Using simulation and rendering a virtual object, in particular a 3D representation of an object under varying conditions, including, e.g., different spatial perspective, varying lighting conditions, benefits from the almost perfect knowledge, which the rendering framework has of its internal state. For example, the rendering framework has ideal knowledge on the transformation between the virtual object and the camera. Hence, a single label on the 3D object is sufficient to predict the corresponding label on a newly rendered image. Hence, the approach offers the capability to provide large amounts of labeled data without requiring excessive manual labeling. However, simulated reproductions generally differ from the real world and thus simulated data proves often only suitable to augment labeled real-world data. Furthermore, the approaches for generating training data using simulation require an elaborate representation of the object (modelling) and computationally complex rendering tools, as well as a labeling of regions of interest in images, which again requires time. Generating training data using simulation results in significant cost for complex software tools, and needs sufficient training of the user.

In a different technical field relating to localization applications, EP 4 053 801 A1 discloses generating training data for training models that are perception models for identifying regions of interest in images, e.g., identifying objects or structures in images. EP 4 053 801 A1 discloses a method for generating detecting information for detecting an object, which represents a landmark for localization applications and navigation purposes in an image, by training a neural network. The method uses images that include an image region with the desired landmark and an image region depicting a labeling object situated in a certain spatial relation to the desired landmark for generating the training data. The method aims at identifying unique immobile landmarks that allow a robust localization of an autonomous agent, and uses regions in images that represent objects for which detectors are already available. Although EP 4 053 801 A1 provides a process of labeling regions of interest in images, which is efficient in required processing time, it requires presence of labelling objects near the landmark, which restricts its applicability.

It is an object of the invention to improve processes for generating training data for training models for visual detection and classification of objects with regard to simplicity of the process, speed of data generation, quality of the training data and cost effectiveness.

The method for generating image data for generating training information according to independent claim 1, and the method for generating classification information for an automated image analysis related to a local feature of an object in an image, the system for generating image data for generating training information, and the system for generating classification information for an automated image analysis related to a local feature of an object in an image according to the corresponding independent claims provide advantageous solutions to the aforementioned problem.

The dependent claims define further advantageous embodiments.

In a first aspect of the invention, the method for generating image data for generating training information for an automated image analysis related to a local feature in an image, comprises the steps: applying at least one physical marker device adjacent to the local feature of a object; and acquiring, with at least one camera sensor, a plurality of images of the object and storing the plurality of images.

The method for generating classification information for an automated image analysis related to a local feature of an object in an image according to a second aspect comprises steps of; obtaining a plurality of images of the object; detecting at least one physical marker device applied adjacent to the local feature of the object in at least one image of the acquired plurality of images; computing, for each detected at least one physical marker device, a region of interest in the at least one image based on predetermined relative location information associated with the at least one physical marker device; generating mask information based on the computed region of interest and storing the generated mask information associated with the at least one image as training information; and generating classification information for the automated image analysis related to the local feature by training a model using the stored training information.

The method according to the first aspect enables an economically advantageous marketing of a plurality of images stored in a non-volatile memory device, e.g., which forms a basis for generating training information for generating classification information for use in automated image analysis related to the local feature by training a model using the stored training information.

Alternatively, the features of the method according to the first aspect and the second aspect may be combined within scope of the attached claims.

The local feature may include a local physical feature. The object can be a physical object.

The generated training information enables to train the model for generating classification information for an automated image analysis related to a local feature in an image. The classification information may in particular be classification information for detecting, segmenting, classifying, identifying and/or determining a regression for the local feature in an image using the stored classification information.

The mask information is information is information that enables separating specific regions (areas) or object representations within an image. Generally, image masking is an approach in image processing and computer vision that allows masking off undesired parts of the image and concentrating the processing resources to areas of interest, thereby contributing to precise and accurate processing results at an acceptable use of processing resources. The mask information may define a binary image comprising pixels with zero pixel values and non-zero pixel values. Applying the mask to a corresponding image of a same image size, all pixels of the image, which correspond to a pixel in the mask with a pixel value of zero, are set to zero. All other pixels of the image, which correspond to a pixel in the mask with a non-zero pixel value, remain unchanged.

The model is a machine-learning model (ML model, model). The trained model enables a classifier to identify and label local object features of objects in images.

The method according to the first aspect provides labeled image data for generating large sets of training data in a short time, and with only limited involvement of a human expert. Thus, the method is useful for generating large sets of training data for machine learning of a model using supervised learning and deep learning approaches.

The method enables to build machine-learning models of a high quality in a short amount of time at acceptable cost.

The training effort for working with the method according to the first aspect in a specific technical domain is only small for the human expert in that domain due to utilizing the physical marker devices, whose use in the method is intuitive contrary to virtual labeling tools usually employed for labeling image data.

The method proves particularly useful when applied to objects, which have a reflective or at least partially transparent surface. Objects change their appearance significantly with a change of lighting conditions, e.g. a change of a background direction of lighting, a change in camera pose of a camera taking the image(s), and a change in an object pose of the object. Under these conditions, large amounts of training data are necessary for training models that are used in processes of detection, classification, identification, segmentation, and tracking of small features, e.g. small surface features on the surface of objects reliably and with high quality.

The method provides a useful and efficient approach for transferring implicit domain knowledge in different domains from a human, e.g., a human expert in a specific field of application, to an automated system, in particular an autonomously operating system. The method requires only a restricted training overhead for the knowledge transfer.

The invention is useful in detection scenarios in which no generic model for use in the classifier is available. The method is therefore in particular useful in industrial application areas or in personal learning settings, in which the labeling overhead for generating the training data for learning the model is large and therefore expensive in relation to the number of applications of the trained model.

Using the physical marker device in the method according to the first aspect is advantageous when compared with a conventional approach of drawing image labels in images using a software tool, when acquiring a high number of images of the object with the attached physical marker device. Preferably, a large number of images with different image capture parameters, from various viewing angles, in various lighting conditions and with different backgrounds are captured and stored for a singular arrangement of the physical marker device on the surface of the object.

According to an embodiment, the method comprises applying the at least one physical marker device adjacent to the local feature on the surface of the object.

The physical marker device may comprise an augmented reality (AR) marker or a QR marker arranged on a carrier material.

AR markers are images or small objects that are integrated into a system in order to align or position augmented reality objects using a location of the AR marker in the real world. QR markers (QR-based markers) are images that include a QR code, which is a two-dimensional, advanced version of a barcode. QR codes can be used to encode information in a plurality of pixels arranged in the shape of a square grid. For detecting, locating and evaluating AR markers and QR-based markers in images exist established and computationally efficient solutions.

In an embodiment, the method includes the carrier material consisting of a flexible material, in particular comprises a sheet of paper or a plastic plate.

Thus, the physical marker device has a flexible or bendable structure. The physical marker device adapts to curved, e.g. concave or convex shapes of the surface of the object, which eases attaching the physical marker device to the surface. Furthermore, a flat layout of the attached physical marker device increases the angular range for capturing images of the attached physical marker device on the object, thereby increasing the amount of training information for one attached physical marker device on the object. The quality of the training data including all the training information increases, hence the classification results provided by the trained model applied in a classifier also improve.

The at least one physical marker device in an embodiment of the method has an annular structure.

The annular structure or ring structure surrounds the region of interest. The user may immediately understand the region of interest, which applies to any structure of the physical marker device that surrounds the region of interest. The process of labelling the region of interest and the extent of the region of interest does not require extensive training for the user. A disadvantage of the annular structure is in the potential visual influence of the physical marker device on the visual appearance of region of interest, and therefore on a result of the training.

A surface of the at least one physical marker device has a specific color or a specific visual pattern, in particular a specific dot pattern.

Hence, the physical marker device is easily detectable by computer vision in the images depicting the object.

According to an embodiment of the method, the at least one physical marker device includes a fastener means for attaching the at least one physical marker device on a surface of the object.

Thus, the physical marker device remains attached to the object when the plurality of images are captured by the at least one camera sensor. The fastener means may also ensure that the physical marker device adapts to the shape of the surface of the object, and does not project significantly beyond the surface.

Preferably, the physical marker device is removably, in particular only temporarily fixed to the surface of the object. The physical marker device may be removed after acquiring the plurality of images of the object with the attached physical marker device on the surface.

Thus, the object may be re-used for learning another local feature of a same or different class with the same or another physical marker device.

The fastener means includes at least one of an adhesive layer, a removable glue, a magnet, a suction cup, and a clip device.

The adhesive layer ensures that a flat, flexible object conforms to the shape of the object. The clip device has the specific effect that, after removing the physical marker device from the object, no traces affecting the visual appearance, and therefore further series of images of the object for generating training information.

The adhesive layer may comprises a removable glue.

Removable glue combines the effect of holding the physical marker device flat to the surface of the object, while after removing the physical marker device and the remains of the glue from the surface of the object; nothing remains interfering with the visual appearance of the surface of the object, which ensures that object is usable for generating further training information.

The clip device may include a spring-loaded clip device.

The fastener means including a magnet and the at least one physical device comprising a ferromagnetic material enables to attach the physical marker device to the surface of the object. The physical marker device is later removed without leaving any remaining visible traces, thereby avoiding any disadvantageous visual effects on subsequent images of the object.

The at least one physical marker device according to an embodiment includes plural physical marker devices arranged in a pattern (spatial pattern) on the surface of the object that define the region of interest.

Hence, the user may define regularly or irregularly shaped local features of the object. Additionally, the user is enabled to define regions of interest having at least one of a shape or a size that is not predetermined in advance.

Defining the region of region of interest may include surrounding (enclosing) the region of interest on the surface of the object.

The method according to an embodiment includes the plural physical marker devices arranged in a closed-loop-like pattern linked by telescopic connections that define the region of interest surrounded by the closed-loop-like pattern.

In an embodiment of the method, the at least one physical marker comprises a pattern of invisible ink, wherein the invisible ink includes UV-light-fluorescent material, NIR-reflecting material, material reflecting light of a predetermined polarization, or material reflecting electromagnetic waves in a predetermined frequency band.

NIR-reflecting material is a material that reflects light in the near infrared (NIR) spectrum of the electromagnetic spectrum, which is adjacent towards decreasing frequencies (increasing wavelengths) of the visible light spectrum. The NIR spectrum comprises wavelengths from 780 nm to 3000 nm.

The physical marker device is only visible in certain conditions, e.g. an invisible- ink-based physical marker device that is only visible when illuminated with ultraviolet (UV) or infrared (IR) light. In the visible spectrum of the light, hence under normal lighting conditions, the invisible ink-based physical marker device is invisible. Using the invisible-ink-based physical marker device simplifies the process of applying the physical marker device significantly, as the labeling essentially comprises a scribbling with a pen for invisible ink on the region of interest on the surface of the object. Subsequently, in the step of acquiring the plurality of images, (first) images are acquired with a first a camera sensor recording image data in the visible light spectrum. Further (second) images associated with the first images are acquired with a second camera sensor recording image data with a specific filter adapted for receiving light in the spectrum of the invisible ink in order to acquire the images of the physical marker device including the physical ink. Thus, both the unchanged appearance of the region of interest and the physical marker device can be acquired at the same time with two camera sensors and a respective pair of associated images. Alternatively, one camera sensor may be used for sequentially acquiring the first and second images utilizing changing illumination conditions different between the first and second images, e.g., rapidly switching illumination of the object between visible and IR/UV light.

The embodiment using invisible ink is advantageous since it minimizes the influence of the applied label, here the physical marker device, on the visual appearance of the object in the images. Therefore, the learned model reliably performs on new images in which the physical marker device is not present, avoiding the scenario that during training the model using the training information, the model actually learns detecting the physical marker device instead of detecting the region of interest.

According to an embodiment of the method, the physical marker device includes at least one body part of a body of the user, in particular at least one finger, or a hand that is arranged in a particular gesture.

Thus, user may simply point to the local feature, which is intuitively and reduces the training effort for the user for applying the method.

The method according to an embodiment includes the at least one physical marker device being of one type of a plurality of types of physical marker devices that differ by a size of the physical marker devices, wherein the size of the at least one physical marker device defines a size of the region of interest in at least one image of the plurality of images.

Using different sizes of a same general type of the physical marker device enables to associate each size of the marker device with a specific relative size and offset of the region of interest relative to the physical marker device in the relative location information. Selecting a different size of the physical marker device of a same type then has the effect of defining a region of interest with the associated different size of the region of interest. Thus rescaling the physical marker device by means of a simple selection by the user results in an automatic and intuitive rescaling of the region of interest. For example, there may be physical marker devices for a square-shaped region of interest with lateral length of 0.01 m, 0.02 m, 0.05 m, and 0.10 m available.

According to an embodiment, each of the plurality of types of physical marker devices is associated with (encodes) one of a positive classification of the region of interest, a negative classification of the region of interest, and a classification confidence of a user applying the at least one physical marker device.

Thus, a user may intuitively enhance the variability of the generated training information, thereby improving the quality of the trained model resulting from training, and consequentially, the performance of a classifier applying the trained model.

The classification confidence may include one of a certain positive classification, a probably positive classification, and a 80%-negative classification for the associated region of interest.

The method according to an embodiment includes the at least one physical marker device comprising an occluding means for occluding visually the physical marker device at least in part.

The occluding means may comprise a movable flap that is movable between a first position, in which the movable flap at least partially occludes the physical marker device, and a second position, in which at least a detectable part of the physical marker device is entirely visible on captured images. Since detecting the physical marker device requires being at least the detectable part of the physical marker device being visible on the plurality of images, an unintended labeling of areas in the plurality of images during the process of applying the at least one physical marker device to the object is avoided, and quality of the generated training information is maintained.

The user at least partially occluding the physical marker device during the step of applying the physical marker device, e.g. by using the hand or a finger, may achieve a corresponding effect. As detecting the physical marker device using known algorithms usually fails with even small occlusions of the detectable part of the physical marker device, the unintended labeling of areas in the plurality of images during the process of applying the at least one physical marker device to the object is avoided.

The method according to an embodiment comprises applying the at least one physical marker device adjacent to the local feature of a object in a predetermined in-plane angle relative to an orientation of an image-plane of the at least one camera sensor, wherein the predetermined in-plane angle encodes a degree of membership of the local feature to a particular class.

The degree of membership quantifies a grade of the membership of the local feature to the particular class. In case of a regression, the degree of membership has a scalar value.

Thus, the same physical marker device encodes additional information on the local feature. The user performing the labeling process may perform the encoding in a highly intuitive manner, without requiring in depth training to transfer his expert knowledge to the classifier during the training.

The method according to an embodiment includes, in the step of detecting the at least one physical marker device, detecting specific patterns in the plurality of images based on pre-learned computer-vision models of the at least one physical marker device.

Thus, the physical marker device is detected reliably, with low computational effort.

According to an embodiment, the method comprises the method comprises plural application modes. When operating in a first application mode, the at least one physical marker device is associated with a region of interest with a positive example of the local feature, and the other regions of the image denote regions of with negative examples the local feature.

When operating in a second application mode, constraining a sensor view of a camera sensor for acquiring the plurality of images to a view that includes only the regions of interest in the plurality of images, or covering other regions than the regions of interest to inhibit acquiring image information therefrom.

Thus, the method avoids learning a model to detect the physical marker device in images instead of learning to detect regions of interest in the images.

The method according to an embodiment comprises displaying, on a screen of a handheld device or a wearable augmented reality/virtual reality device, the at least one region of interest associated with the detected at least one physical marker device online during training the model. The method further comprises acquiring a user input from the user, via a human machine interface, including a classification for association with the displayed region of interest, or for terminating processing in case of reaching a predetermined classification quality.

Hence, the method is well suited to guide an inexperienced user without in-depth training in creating training data for machine learning of classification models.

A further embodiment of the method comprises steps of verifying the trained model by applying the trained model on the stored training information, and determining, whether a positive classification of the regions of interest occurred outside of areas in the plurality of images associated with the detected physical marker devices. In case of determining that the positive classification of the regions of interest occurred outside of areas in the plurality of images associated with the detected physical marker devices, the method comprises performing at least one of: communicating the determined positive identification of the regions of interest that occurred outside the areas in the images associated with the detected physical marker devices via the human-machine interface to a user, executing the method for generating new training information, and generating new classification information by further training the model using the stored training information..

The method according to an embodiment comprises generating a new mask information based on the at least one image including a visually modified representation of the detected at least one physical marker device, and storing the generated new mask information associated with the at least one image as further training information.

Thus, the additional step minimizes the influence of the applied physical marker devices on the visual appearance of the object. Therefore, the undesired effect that the learned classifier learns to classify based on the representation of the physical markers in the images instead of the regions of interest is avoided by an explicit learning of marker invariance. Varying the image content of the new mask information, e.g., results in the model learning to become invariant to the visual appearance of the physical marker device. Visually modifying may include modifications from data augmentation, replacing image content in the new mask with different pixels in each training iteration of the model.

In a third aspect of the invention, the system for generating image data for generating training information for an automated image analysis related to a local feature in an image, the system comprises at least one physical marker device applied adjacent to the local feature of an object. The system further comprises at least one camera sensor configured to acquire a plurality of images of the object, a memory configured to store the plurality of images.

In a fourth aspect of the invention concerns a system for generating classification information for an automated image analysis related to a local feature of an object in an image. The system comprises a processor configured to acquire a plurality of images of the object. The processor is further configured to detect the at least one physical marker device in at least one image of the acquired plurality of images, to compute, for each detected at least one physical marker device, a region of interest in the at least one image based on predetermined relative location information associated with the physical marker device, to generate mask information based on the computed region of interest, and to store the generated mask information associated with the at least one image as training information in the memory, and to generate the classification information for the automated image analysis related to the local feature by training a model using the stored training information.

The systems according to the third and fourth aspect achieve corresponding advantageous effects as discussed with reference to the methods of the first aspect and second aspect.

The following description of embodiments refers to the figures, in which
Fig. 1 presents a flowchart illustrating the process of generating training data according to an embodiment;
Fig. 2 provides a flowchart illustrating the steps of the method of generating training data according to an embodiment;
Fig. 3 illustrates a first example for a physical marker device in an application scenario;
Fig. 4 illustrates a second example for a physical marker device in an application scenario;
Fig. 5 illustrates an application example of using an in-plane angle of the applied physical marker device for encoding degree of membership information;
Fig. 6 illustrates a third example for a physical marker device in an application scenario;
Fig. 7A illustrates a fourth example for a physical marker device in an application scenario;
Fig. 7B illustrates a further variation of the fourth example for a physical marker device in an application scenario;
Fig. 8 illustrates a set of physical marker devices utilized in an embodiment;
Fig. 9 provides a flowchart illustrating steps for applying the physical marker device to the object according to an embodiment, utilizing a set of physical marker devices;
Fig. 10 illustrates a fifth example for a physical marker device in an application scenario;
Fig. 11 illustrates a sixth example for a physical marker device in an application scenario;
Fig. 12 illustrates a seventh example for a physical marker device in an application scenario;
Fig. 13 illustrates an eighth example for a physical marker device in an application scenario;
Fig. 14 provides a simplified block diagram illustrating the architecture of system of an embodiment; and
Fig. 15 displays an example of a hardware structure for an implementation of the system.

In the figures, corresponding elements have the same reference signs. The discussion of the figures avoids discussion of same reference signs in different figures wherever considered possible without adversely affecting comprehensibility and avoiding unnecessary repetitions for sake of conciseness.

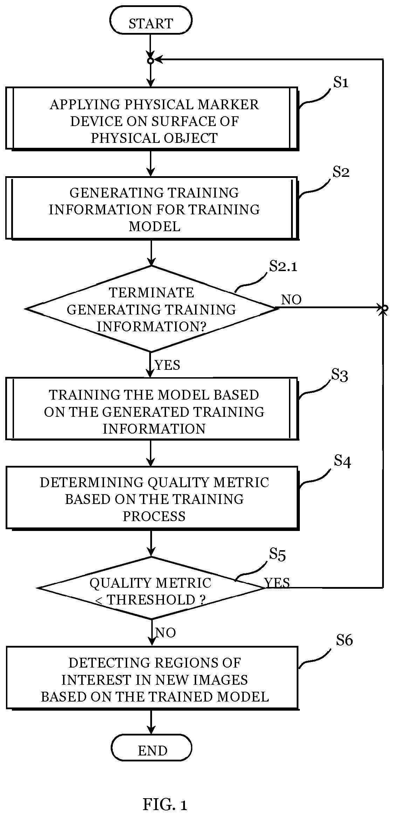

Fig. 1 presents a flowchart illustrating the process of generating training data according to an embodiment being applied in a process for detecting local features on the surface of objects.

The application field of the embodiments includes generally the visual learning of local feature 26 forming part of a object 23. The local features may be features on the surface of the object 23.

In the specific application field of quality control, the method enables to train a classifier for detecting local features, e.g., local defects of the surfaces of the objects 23 including scratches, bubble, pinholes, and inhomogeneous color defects on objects 23 in monitoring processes or testing processes.

In the specific application field of quality control, the method may generate training data for training a classifier for classifying local features, e.g., classifying local bubbles in a foam material according to size in a manufacturing processes.

In the specific application field of visual inspection during monitoring or testing, the method enables to train a classifier for detecting local surface features, e.g., local defects of the surfaces of the objects 23 due to corrosion or wear and tear during operation of the objects 23.

In the specific application field of operating of autonomous devices utilizing computer vision for operating, the method enables to train a classifier for classifying plants in a garden in order to distinguish which plants to mow or to eradicate, which plants to provide with fertilizer or water, and which plants generally to avoid with the autonomous device.

Objects 23 include, for example, vehicle bodies of land, sea, air or space vehicles. An application may include inspection of ship hulls, propeller, or rudder assemblies of ships.

Objects 23 may include elements in a garden or agricultural environment. Each garden includes characteristically a limited number of plant species, that is characteristic for the garden and which requires learning for each garden individually.

The flowchart of fig. 1 illustrates three phases. Generally, the discussed embodiment bases on the specific application of classifying local features that are a part of a object 23 and arranged on, in, or at least near the surface of the object 23.

In a first phase, the method generates training data for training a classifier for classifying local features on the surfaces of the objects 23. Steps S1 and S2 form part of the process of generating training data for training a classifier for detecting local features on the surfaces of the objects 23.

In a second phase, the method learns the classifier detecting local features on the surfaces of the objects utilizing the generated training data. Steps S3, S4, and S5 form part of the process of learning (training) the classifier for classifying local features on the surface of the object utilizing the generated training data.

In a third phase, the method classifies the local features on the surfaces of the objects 23 in new image data, utilizing the trained classifier. Step S6 of the flowchart of fig. 1 represents the third phase of detecting the local features on the surfaces of the objects in new image data, utilizing the trained classifier.

In step S1, the method starts with applying at least one physical marker device on a surface 24 of the object 23 adjacent to the local feature 26 forming part of the object 23.

The physical marker device may be attached to the object near the local feature. The physical marker device may be attached to the object surrounding the local feature with at least a part of the body of the physical marker device.

The physical marker device is a marker that is detectable in an image using a known and available detector with low complexity of the detecting process. Alternatively or additionally, the physical marker device has been pre-learned once is put onto a part of the surface 24 of the object 23 that is to be learned as the local feature 26 of the object 23.

In step S2 following to step S1, the method proceeds with acquiring, using at least one camera sensor, a plurality of images of the surface 24 of the object 23 and storing the plurality of images in a memory module 7.

After recording, e.g. acquiring and storing the plurality of images, the user may remove the physical marker device from the surface 24 of the object 23.

The method then detects the at least one physical marker device in at least one image of the acquired plurality of images of the object 23.

The method may detect the physical marker device, in particular, a presentation of the physical marker device in the plurality of images using an available or pre-trained detection software.

For each detected at least one physical marker device, the method then computes, a region of interest 22, 44, which includes a local feature representation, in the at least one image based on predetermined relative location information associated with the at least one physical marker device.

The region of interest is used to generate the mask information that defines a labeled training mask that may be used directly for training the model. Alternatively or additionally, the mask information is stored as an image in an image data format for later training using the stored mask information.

The mask information is then stored associated with the at least one image as training information in the memory module 7.

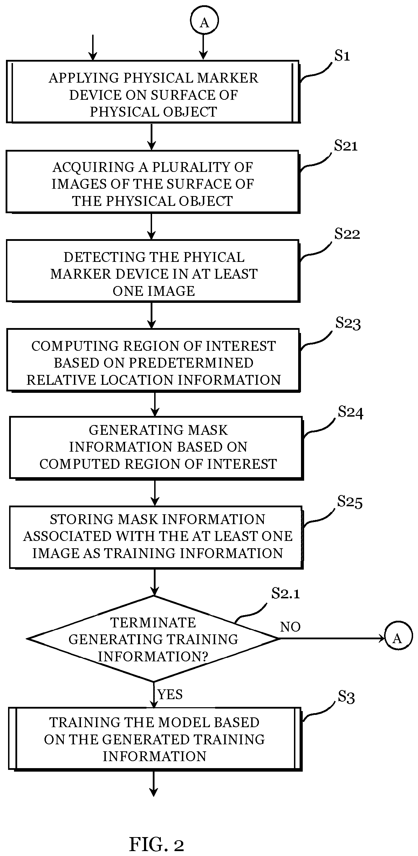

The processing of step S2 is discussed in more detail with regard to the flowchart of fig. 2.

In step S2.1 following to step S2, the method determines whether to terminate generating the training information. In case of determining that further training information is to be generated and the process of generating training information is not yet to be terminated (NO), the method returns to step S1 and again executes steps S1 and S2. The method collects further instances of training information before starting training the model. In case of determining in step S2.1 that the process of generating training information in steps S1 and S2 is to be terminated (YES), the method proceeds from step S2.1 to step S3.

In step S3, the model is trained utilizing the training information generated in step S2. In particular, the method then generates classification information for classifying the local feature in images by training the model using the stored training information.

In step S3, alternatively, an already trained model (pre-trained model) may be refined (retrained) using the stored training information generated in step S2.

In step S4, the method determining a predetermined quality metric based on the training process. The quality metric may be determined utilizing predetermined set of validation information. The quality metric may be determined utilizing statistics generated during the training process of the model, e.g., losses.

In step S5, the determined quality metric is compared with a predetermined threshold (quality threshold). In case of determining that the determined quality metric exceeds the predetermined threshold, the method proceeds to the third phase (application phase) including step S6.

Alternatively or additionally, the method may output information to the user requesting the user to decide whether to continue adding data, or to use the trained model in the subsequent application phase.

If the user decides, based on the output information to add further training information, the user can put the physical marker device, or a different physical marker device, e.g. of a different type, on a new instance of the object 23, on a different local part of the same object 23 including a local feature of interest, and repeat the method in a new iteration of the sequence of steps S1, S2, S3, S4, and S5.

In step S6, the method obtains new images and proceeds with detecting regions of interest 22, 44 in the new images utilizing the trained model.

If the method determines in step S5 that the determined quality metric is smaller than the predetermined threshold, the method returns to step S1. In a next iteration of the first phase and second phase, the method prompts the user to attach the physical marker device to another representation of the local feature on the surface of the object 23.

Fig. 2 provides a flowchart illustrating the steps of the method of generating training data according to an embodiment. Fig. 2 illustrates in particular step S2 of the first phase, the process of generating training information for training a classifier for detecting local features on the surfaces of objects 23in more detail when compared with fig. 1.

The method for generating classification information for classifying an object representation of the local feature in an image of the object 23 starts in step S1 with applying at least one physical marker device on the surface 24 of the physical object 23.

The generated detection information includes a machine-learning model (ML-model) for a classifier that enables to identify, to segment local visual features on the surface of objects 23 in images of the physical object 23, or to track local visual features on the surface 24 of objects 23 over a sequence of images of the object 23.

In step S21, the method acquires with at least one camera sensor, a plurality of images of the surface 24 of the object 23. The method stores the acquired plurality of images in the memory module 6.

In step S22, the method performs a detection process for detecting, the at least one physical marker device, in particular a visual representation of the physical marker device in at least one image of the acquired plurality of images stored in the memory module 6.

In step S23, the method determines (computes) for each detected at least one physical marker device in at least one of the images, a region of interest 22, 44 including a local object feature representation in the at least one image based on predetermined relative location information associated with the detected at least one physical marker device.

The predetermined location information may include an offset information, a shape information, and a size information of the region of interest relative to a location of the physical marker device on the surface 24 of the object 23.

The predetermined location information may include information whether the region of interest 22, 44 is a positive region of interest or a negative region of interest 22, 44. A positive region of interest 22, 44 is a region on the surface 24 of the object 23, in which an instance of the local feature is present. A negative region of interest 22, 44 is a region on the surface 24 of the object 23, in which no instance of the local feature 26 is present.

The predetermined location information is stored in a memory and may be retrieved for the computation in step S23 from the memory.

The predetermined location information may be stored in software code and be therefore static and associated with each distinguishable type of a detectable physical marker device.

The predetermined location information may be amended by the user using a user interface, and stored associated with the respective type of detectable physical marker device.

In step S24, the method proceeds with generating mask information based on the computed region of interest 22, 44.

In step S25, the method stores the generated mask information associated with the at least one image as training information. The method stores the generated training information in the memory module 6.

Having executed step S25, the method determines in step S2.1, whether further training information is to be generated in a further processing cycle of executing steps S1, S21 to S2.1, or whether to terminate the first phase. In case of determining that generating training information is to be terminated (YES), the method proceeds to the second phase and generates in step S3 detection information for detecting the local feature 26 in images (local feature representation) by training the model using the stored training information in the memory module 6.

The model may be an image classification model or an image segmentation model.

Training the model in step S25 includes directly using the generated mask and the associated image to train a new model, or to retrain (refine) a pre-trained, already existing model.

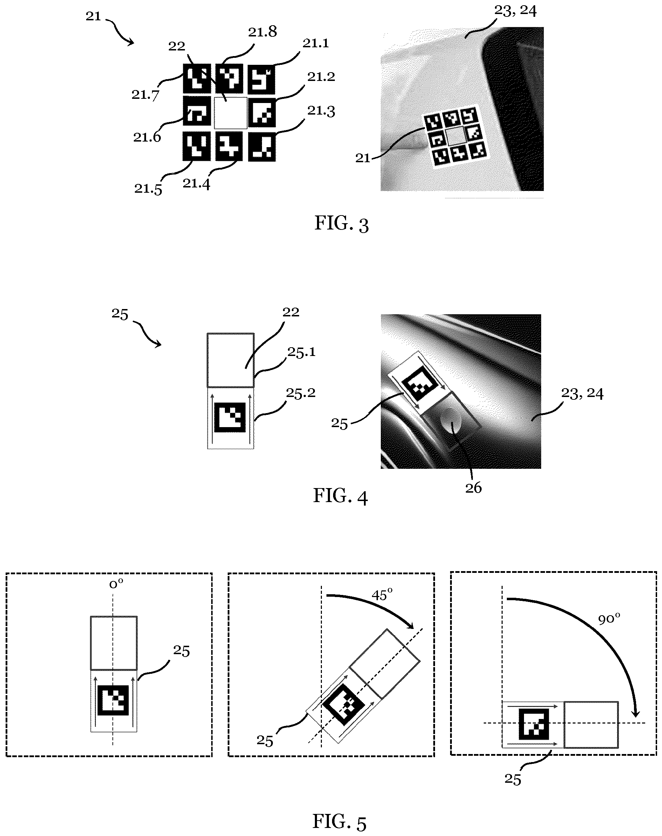

Figs. 3 to 11 illustrate examples of physical marker devices and their use in the method and system according to embodiments in more detail. Generally, the method is suitable for use with physical marker devices of many different types and designs. The figures illustrate some specific examples of physical marker devices. Before discussing specific aspects of the illustrated examples with reference to the figures, some common aspects concerning the physical marker devices are discussed.

The physical marker device may be a known AR marker or QR marker as known in the field of computer vision. Detecting an AR marker or QR marker may be implemented using the existing software solutions available in the field of computer vision.

The physical marker device in the form of the AR marker or QR marker may be printed on a paper carrier material, a plastic carrier plate, or any other printable carrier material.

The physical marker device may include a single physical marker device corresponding to a single region of interest 22, 44, or an arrangement of plural physical marker devices corresponding to the single region of interest 22, 44.

The physical marker device may have a particular visual appearance, e.g., a specific design or outward appearance, e.g. a visual pattern that is detectable by computer vision models. The pattern of the physical marker devices are preferably learned before starting an implementation of the method for generating the detection information. Simple examples for such patterns include designing the physical marker device in an annular form, e.g., with a particular color on the surface of the physical marker device directed away from the surface 24 of the object 23.

Alternatively or additionally, the surface of the physical marker device directed away from the surface 24 of the object 23 may be designed in an easily detectable dot pattern that is unique in the usage scenario, in which the images are acquired for generating the training information.

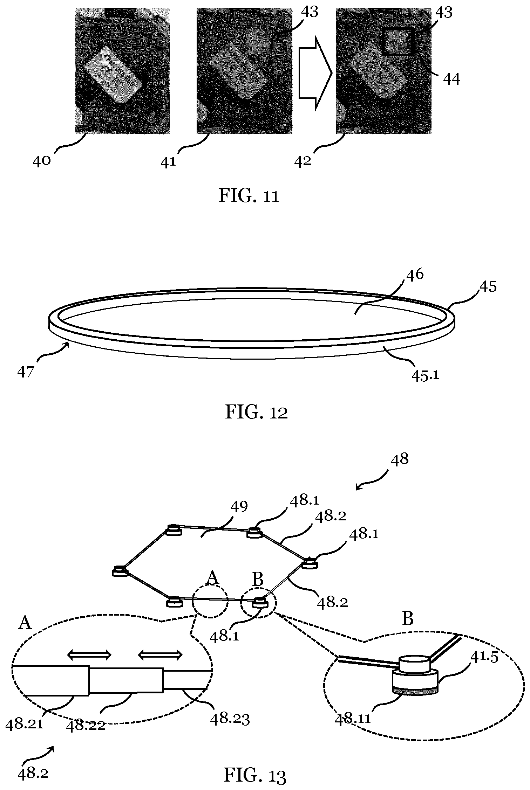

The physical marker device may be configured to be flexible and bendable, consisting of a flexible material (non-rigid material) or have a flexible layout permitting a respective deformation of the physical marker device. In an embodiment, a carrier material of paper or plastic may provide a certain degree of flexibility. Alternatively or additionally, the physical marker device may comprise a polygonal ring of elementary physical marker devices that are connected via flexible means, e.g., a flexible means comprising cord, wire, or telescopic rod-like connectors in a closed-loop arrangement. The flexible physical marker device offers the user with the advantageous characteristic of being adaptable to specific surface forms of the surface of the object 23. The flexible physical marker device is therefore a versatile tool for the user to address a plurality of specific labeling scenarios with one single type of physical marker device. Fig. 11 presents a specific example for a flexible physical marker device.

The physical marker device may be applied to the surface 24 of the object 23 using an invisible ink and a respective ink pen.

The invisible ink may have UV light fluorescence or NIR detectability, which means that the invisible ink fluorescent or contrasting in the electromagnetic spectrum of UV light or in NIR light respectively. In the electromagnetic spectrum of visible light, the invisible ink is transparent or colored in correspondence to the surface 24 of the object 23.

The physical marker device may be applied to the surface 24 of the object 23 using a specific ink and a respective ink pen. The specific ink is only visible in a narrow band of the electromagnetic spectrum, e.g., when illuminated by a laser in the respective band of the electromagnetic spectrum.

The physical marker device may comprise a carrier material, e.g. in a plate format or in the form of an ink that is distinguishable in polarized light.

Figs. 3, 4, 5, and 11 present aspects of the attachment of the physical marker device to the surface 24 of the object 23.

A user may hold the physical marker device temporarily at its location on the surface 24.

Alternative and advantageous solutions include fastening means for temporarily fixating the physical marker device on the surface 24 of the object 23.

The physical marker device may provide the fastening means integrally when being designed in the form of an adhesive sticker. A removable glue on the surface of the physical marker device pointing towards the surface 24 of the object 23 enables to attach removably the physical marker device to the surface 24. This is in particular advantageous in combination with a flexible carrier material or a flexible carrier plate of the physical marker device, as the adhesive area adapts to concave or convex shapes of the surface 24 of the object 23.

The marker device may provide the fastening means in the form of a clip device, e.g. a spring-loaded clip device, a nail, a bracket, or a clamp that mechanically fixates the physical marker device on the surface 24 of the object 23. Selecting the fastening means may depend on the material of the object 23, which ideally shows no visible traces on the surface 24 after removing the physical marker device from the object 23. E.g., a fastening means in the form of a nail may be suitable in a garden environment, when labeling specific species of plants as local features, and unsuitable when labeling local features on the surface 24 of vehicle bodies.

In an alternate application scenario, the fastening means may include at least one magnet 28.11 for fixating the physical marker device on the surface 24 of the object 23 that has ferromagnetic characteristics.

The discussed physical marker devices in combination with the proposed processing in the embodiments for generating the training information provides best results for objects 23 that have locally flat surfaces that include the local features or object parts to be classified. In case of surfaces that include the local features 26 or object parts extending significantly into a third dimension from the flat surface 24 of the physical object, and therefore deviate from a locally flat structure, effects of perspective may deteriorate the labeling accuracy by the physical marker device, in particular for images captured with a low camera angle with regard to the surface 24 of the object 23.

Utilizing 3D processing, e.g. by using a 3D camera sensor, e.g. an RGBD camera, and a physical marker device, e.g., an AR marker defining a volume of interest in 3D relative to the AR marker enables to overcome this issue. The volume of interest may include, e.g., a cube of a predetermined side length with a predetermined distance from the physical marker device. The cube-shaped volume of interest may have its bottom side in the plane of the flat physical marker device. The predetermined side length and the predetermined distance of the cub-shaped volume of interest may each have a length of 2 cm.

The following figures provide specific examples for physical marker devices.

Fig. 3 illustrates a first example for physical marker device(s) 21.x in an application scenario.

The arrangement of plural physical marker devices 21 corresponds to a single region of interest 22. The plural physical marker devices 21.x, x= 1, ..., 8, each with a unique visual appearance are positioned in a rectangular, in particular square-shaped arrangement 21 that encloses the region of interest 22 on the surface 24 of the object 23.

The arrangement of plural physical marker devices 21 includes one physical marker device 21.1, 21.3, 21.5, 21.7 positioned at each corner of the square-shaped arrangement.

The arrangement of plural physical marker devices 21 further includes one physical marker device 21.2, 21.4, 21.6, 21.8 positioned at a center of each side of the square-shaped arrangement.

Each of the plural physical marker devices 21.x, x= 1, ..., 8, has a unique optical appearance, which may encode the relative position of the respective physical marker device 21.x, x= 1, ..., 8 relative to the region of interest 22.

The arrangement of plural physical marker devices 21 improves the probability of detecting the region of interest 22 due to the redundancy of eight physical marker devices 21.x, x= 1, ..., 8 associated in a predefined spatial manner relative to one region of interest 22, which may also increase robustness against visual occlusions in the acquired images.

In the example of fig. 3, the method generates classification information for classifying an object representation that corresponds to a color defect or a scratch on the surface 24 of a vehicle corresponding to the object 23 in an image of the vehicle body, as shown in the right portion of fig. 3.

Fig. 4 illustrates a second example for a physical marker device 25 attached to the surface 24 of the object 23 in an application scenario shown in the right portion of fig. 4.

The physical marker device 25 comprises a rectangular carrier plate of a flexible material, e.g., a thin sheet of plastic. The physical marker device 25 includes a window portion 25.1 and a marker portion 25.2.

The window portion 25.1 includes an opening (window), which enables to acquire an image of the region of interest 22 on the surface 24 of the object 23 when the physical marker device 25 is applied to the surface 24. The window portion 25.1 may include a frame enclosing the region of interest 22. The window portion 25.1 enables the user to label the region of interest 22 intuitively, supported by the window portion 25.1 as a targeting aid for applying the physical marker device 25 to the surface 24 correctly in relation to the local feature 26.

The physical marker device 25 is shown in the right portion of fig. 4 attached to the surface 24 of a vehicle body as the physical object 23. The region of interest 22 labeled by the physical marker device 25 includes a local defect as the local feature 26 (coating defect 26) in the color coating of the vehicle body. The method is well suited to generate training information for training a classifier for detecting coating defects such as orange peel, ropiness, and other undesired film characteristics on bright and shining, often convex-shaped surfaces 24 of vehicle bodies.

The marker portion 25.2 of the physical marker device 25 includes a QR code and at least one optical indicator, e.g. two arrows in the example of fig. 4, which further support the user when applying the physical marker device 25 to the surface 24 relative to the local feature 26.

The marker portion 25.2 corresponds the detectable part of the physical marker device 2, which the system 1 detects in an image of the plurality of images. During the labeling process, an unintended labeling of areas in the images that are not intended to represent regions of interest 22 requires avoiding, for achieving sufficient quality of the generated training information and, ultimately, the trained model for use in the classifier. An unintended labeling of areas in the images may occur during the labeling process, when images are already taken while the user is yet in the process of putting the physical marker device(s) on the object 23.

By using a trigger signal, which is provided to the system when the user terminates the process of applying the physical marker device on the object 23, e.g., by operating a button on an human machine interface may ensure the explicit and unambiguous separation of steps S1 and S21 of the method. Hence, the method avoids the unintended labeling of areas in the images.

Alternatively or additionally, the system 1 may require the user to explicitly start and stop the step S21 of acquiring the plurality of images, ore recording a video comprising a sequence of images corresponding to the plurality of images.

Alternatively or additionally, the physical marker device may include an occluding means not explicitly shown in fig. 4. The occluding means at least in part visually occludes the physical marker device, in particular the marker portion 25.2 of the physical marker device 25.

The occluding means comprises, e.g., a movable flap that is movable between a first position in which the movable flap at least partially occludes the physical marker device, in particular the marker portion 25.2 of the physical marker device 25, and a second position. In the second position, the detectable part of the physical marker device 25 is entirely visible on captured images. Detecting the physical marker device requires at least the detectable part (marker portion 25.2) of the physical marker device 25 being entirely visible on the plurality of images. Hence an unintended labeling of areas in the plurality of images during the process of applying the at least one physical marker device 25 to the object 23 is avoided, and the quality of the generated training information is maintained.

As an alternative to the movable flap, a slider covering at least a part of the marker portion 25.2 may be used.

The user performing the labeling in step S1 may manually operate the slider or the movable flap.

Alternatively, the marker device 25 may include a spring-loaded button configured to uncover automatically or in response to a user operation the marker portion 25 when applying the physical marker device 25 to the object 23.

The OR code of the marker portion 25.2 of the physical marker device 25 may include encoded information on the marker, e.g., whether the physical marker device 25 is a positive marker or a negative marker.

Fig. 5 illustrates an application example that enables evaluating an in-plane angle of the applied physical marker device 25 for acquiring encoded class information as additional input.

The embodiment in the scenario of fig. 5 comprises applying the at least one physical marker device 25 adjacent to the local feature 26 forming part of an object 23 in a predetermined in-plane angle relative to an orientation of an image-plane of the at least one camera sensor sensor1, sensor2. The predetermined in-plane angle encodes a degree of membership of the local feature 26 to a particular class based on the expert knowledge of a user. The degree of membership quantifies a grade of the membership of the local feature 26 to the particular class.

In case of a regression, the degree of membership has a scalar value.

In the examples discussed previously, e.g., with reference to fig. 4, the physical marker device 25 indicated whether the region of interest 22 belonged to a particular class. The region of interest 22 is labeled as being a positive member of one of a binary membership for classification. In order to label negative observations (cases) of the local feature 26, an evaluation of the training information assumes all unlabeled areas to represent negative observations. Alternatively, an additional and distinguishable physical marker device 25 is required for explicitly labeling of negative observations of the local feature 26.

In the embodiment of fig. 5, the same physical marker device 25 encodes additional information on the local feature 26. The user performing the labeling process may perform the encoding in a highly intuitive manner, without requiring in depth training to transfer his expert knowledge to the classifier during the training.

In an encoding example for the degree of membership in the particular class, applying the physical marker device 25 with an orientation that corresponds (is equal to) the orientation of the image plane of the at least one camera sensor, resulting in an in-plane angle of 0° (0 degree), encodes a 100 % (full) membership of the local feature 26 in the particular class. The left partial picture of fig. 5 illustrates this specific example.

An in-plane angle of 45° encodes a 75 % membership, The center partial picture of fig. 5 illustrates this specific example.

An in-plane angle of 90° encodes a 50 % membership. The right partial picture of fig. 5 illustrates this specific example.

Not illustrated in fig. 5 are an in-plane angle of 135° encoding a 25 % membership, and an in-plane angle of 180° encoding a 0 % membership. A membership degree of 0 % corresponds to a negative example (observation, case) for the membership in the particular class.

Additionally, the system 1 may include a human machine interface that outputs at least one of the in-plane angle and the degree of membership to the user during the ongoing labeling process for supporting the user when applying the physical marker device 25 to the object 23.

The human machine interface may use a display device, e.g., a monitor or an augmented reality headset (AR headset) for providing the at least one of the in-plane angle and the degree of membership for supporting the user in the form of an easily understandable feedback without requiring significant amount of training for the user in advance.

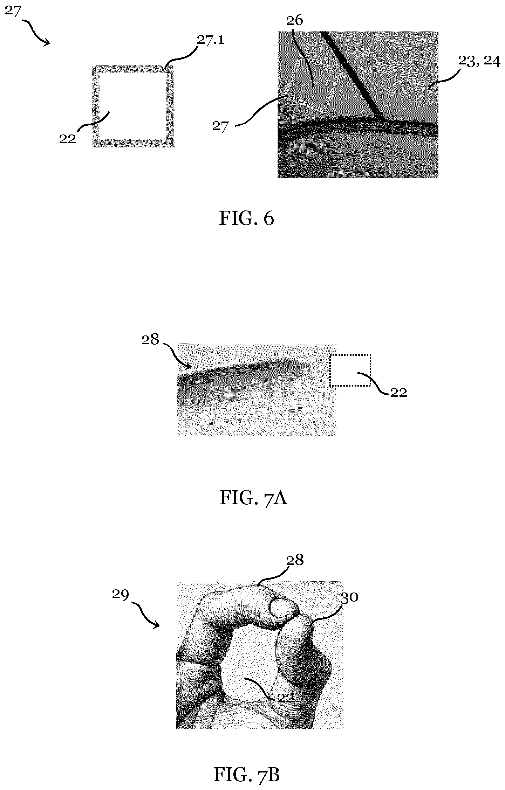

Fig. 6 illustrates a third example for a physical marker device 27 in an application scenario.

The physical marker device 27 has a rectangular layout formed by a frame structure 27.1 made of a flexible carrier material surrounding an opening (window), which defines the area of interest 22 of a respective rectangular shape. As in the example of fig. 4, the physical layout of the physical marker device 27, in particular the shape of the frame structure 27 encodes the predetermined relative location information, which enables to determine (compute) the region of interest 22 in the image when having detected the physical marker device 27. Similar as in the example of fig. 4 the region of interest 22 in the right portion of fig. 6 includes a local defect 26 in the color coating of the vehicle body, e.g., a scratch.

Fig. 7A illustrates a fourth example for a physical marker device in an application scenario.

Fig. 7A depicts the region of interest 22 in a rectangular shape with a width corresponding to the diameter of the finger 28 and arranged about in extension of a length of the finger 28 at a distance of about a half-width of the finger 28 as an example.

The physical marker device of an embodiment includes at least one finger 28 of the user. In the example of fig. 7A, the physical marker device is the finger of the user. The predetermined relative location information associated with the at least one physical marker device being implemented by the finger 28 may define the region of interest 22 as an area with a size of the fingernail of the finger 28 in the at least one image. The region of interest 22 may be arranged at a position in the image that extends in the pointing direction of the finger, at a predetermined distance from the finger28 with a predetermined shape of the region of interest 28.

Fig. 7B illustrates a further variation of the fourth example for a physical marker device in an application scenario.

In the example of fig. 7B, the physical marker device corresponds to a hand 29 of the user, in particular a finger 28 (forefinger) and a thumb 30 arranged in a particular gesture performed by the user executing the labeling of the local feature 26. In fig. 7B, the specific gesture performed by the user encloses the region of interest 22 by arranging the thumb 30 and the finger 28 with their respective fingertips touching each other, thereby forming a ring-like structure enclosing the region of interest 28.

Both variations of the physical marker device of figs. 7A and 7B provide a particular intuitive method for the labeling process that requires no specific, in-depth training for the user in order to apply successfully the physical marker device on the object 23.

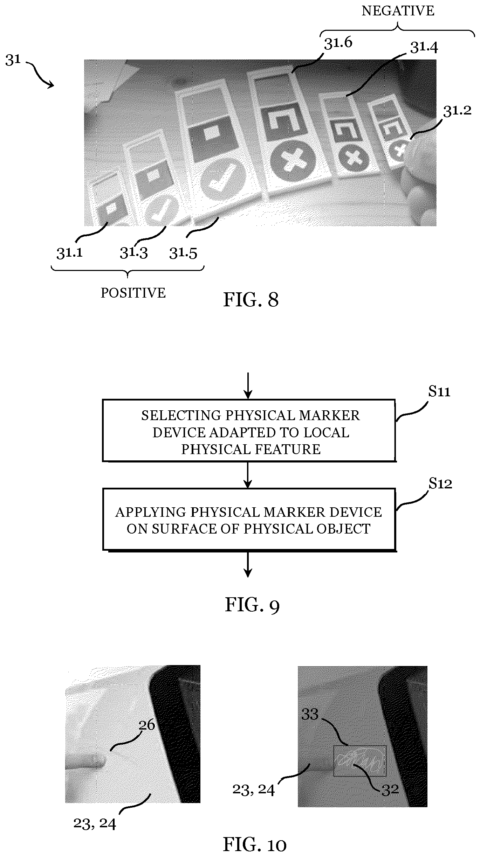

Fig. 8 illustrates a set of physical marker devices 31 utilized in an embodiment.

The set of physical marker devices 31 includes a plurality of physical marker devices 31.x, x = 1, .., 6.

The set of physical marker devices 31 includes one basic type of physical marker device in two subtypes. The first subtype includes physical marker devices 31.1, 31.3, 31.5 for a positive region of interest 22, 44. The second subtype includes physical marker devices 31.2, 31.4, 31.6 for a negative region of interest 22, 44.

The set of physical marker devices 31 includes for each subtype of the two subtypes of physical marker devices three different sizes for each of the positive region of interest 22, 44 and the negative region of interest 22, 44.

Different types of physical marker devices may encode different classes of the regions of interest 22, 44 and the local features 26 on the surface 24 of the object 23.

E.g., the classes encoded by different types of marker devices may include a subset of a certain positive rating, a probable positive rating, and an 80 % negative rating associated with the region of interest 22, 44 indicated by the associated type of the physical marker device. The respective rating depends on the assessment of the user performing the labeling, resulting in a respective classification confidence of the labeling user, which may be an expert in the respective technical field, but is not required to have in-depth knowledge of a labeling tool when working with an implementation of the method.

The set of physical marker devices 31 includes further three groups of physical marker devices, which differ by the size of the region of interest.

A first group of small-size physical marker devices includes the physical marker devices 31.1, 31.2. A second group of mid-size physical marker devices includes the physical marker devices 31.3, 31.4. A third group of large-size physical marker devices includes the physical marker devices 31.5, 31.6.

The set of physical marker devices of fig. 8 provides the user with six physical marker devices for labelling regions of interest on the surface of the object 23.

The set of physical marker devices 31 of fig. 8 enables the user to select the most suitable size and the correct subgroup of the physical marker devices 31.x, x = 1, .., 6 of the set of physical marker devices 31 for labeling a specific region of interest 22 on the surface 24 of the object 23.

In an embodiment, a particular region of interest 22 is defined in terms of the associated relative size of the physical marker device relative to the size of the other physical marker devices of the set of physical marker devices 31. This provides the effect of an automatic scaling of the region of interest 22, 44 by selecting a particular physical marker device from the set of physical marker devices 31. E.g., selecting a physical marker device of a same type of physical maker device with a relative size of 200% of the selected physical marker device in relation to another physical marker device defines an associated region of interest 22, 44 with a size of 200 % of the size of the other physical marker device. An explicit programming by the user performing the process of labeling in the step of applying the physical marker device is not necessary, resulting in an intuitive process, which does not require extensive training for the user.

Fig. 9 provides a flowchart illustrating steps for applying the physical marker device to the object 23 according to an embodiment, utilizing a set of physical marker devices.

Steps S11 and S12 represent sub-steps of the step S1 of the physical marker device to the object 23 during the first phase of generating the training information.

In step S11, the method includes selecting the at least one physical marker device from a plurality of available physical marker devices based on a size and a type of the region of interest 22, 44 on the surface 24 of the object 23.

The plurality of physical marker devices may, e.g. include the set of physical marker devices of different sizes for each of a positive region of interest 22, 44 and a negative region of interest 22, 44 depicted in fig. 7.

In step S12, method proceeds by applying the selected at least one physical marker device at a suitable location relative to the location of the region of interest 22, 44 on the surface 24 of the object 23.

Fig. 10 illustrates a fifth example for a physical marker device in an application scenario.

The physical marker device 32 of fig. 10 is an example using invisible ink. In order to apply the physical marker device 32 to the surface 24 of the object 23, the user utilizes a pen and labels a local feature 26 in the surface 24 of the object 23. The local feature 26 may be a local defect, e.g., a scratch in the surface 24 of the object 23.

The left portion of fig. 10 illustrates an image taken with a conventional camera sensor illustrating the first image in the visible spectrum of light.

The right portion of fig. 10 illustrates a second image taken with an NIR-camera sensor illustrating the a second image in the NIR-spectrum of the light, which includes the physical marker device 32 in form of an irregular ink trace 32 of the invisible ink applied by the user using an ink pen onto the surface 24 at the location of the local feature 26.

The step S23 of computing the region of interest 22 may then include the detected physical marker device, the region of interest 22 including the local feature 26 in the at least one first image based on predetermined relative location information associated with the at least one physical marker device. The predetermined location information in the example of fig. 10 may include computing a frame 33, e.g. a rectangular frame that surrounds the irregular ink trace 32 applied by the user at the location of the local object feature 26 as close as possible. In step S24, the method generates the mask information based on the computed region of interest 22 as indicated by the frame 33 in the right image of fig. 10, and stores the generated mask information associated with the at least one image corresponding to the left image of fig. 10 as the training information.

Fig. 11 illustrates a sixth example for a physical marker device in an application scenario. The application scenario of fig. 11 differs insofar from the example of fig. 10, as the object 23 has a locally flat surface 24 only due to the transparent enclosure of the printed circuit board, but the region of interest 44 depicted in the right picture of fig. 10 has abrupt changes into a direction vertical to an image plane of the camera sensor 58.

The object 23 of fig. 11 is a printed circuit board mounting a plurality of electric circuit elements arranged within the transparent enclosure.

The physical marker device of fig. 11 is as in fig. 10 a region of invisible ink applied by the user onto the surface of the printed circuit board.

The left picture of fig. 11 includes an image 40 captured while illuminating the printed circuit board with light in the visible part of the electromagnetic spectrum only. The physical marker device 43 applied using invisible ink on the printed circuit board is not visible in the image 40 of the left picture of fig. 11.

The center picture of fig. 11 includes an image 41 captured while illuminating the printed circuit board with light in the visible part of the electromagnetic spectrum (visible light) and additional illumination with light in the UV part of the electromagnetic spectrum (UV light).

The physical marker device 43 applied using invisible ink that reflects light in the UV part of the electromagnetic spectrum on the printed circuit board is clearly visible in the center picture of fig. 11.

The right picture of fig. 11 illustrates the result of computing the region of interest 44 based on the detected at least one physical marker device 43, wherein the region of interest 44 includes the local object feature representation in the image 42 based on the predetermined relative location information associated with the at least one physical marker device 43.

The left picture and the center picture of fig. 11 illustrate a switching between light sources, which illuminate the object 23. In the left picture, a first light source emits the visible light, in which the object 23 appears unchanged in the acquired image. In the center picture of fig. 11, a second light source emits the UV light, which enables acquiring an image for detecting the physical marker device 43, e.g., due to the UV light the physical marker device 43 comprising an UV fluorescent paint becomes visible in the picture acquired by a second camera sensor adapted to capturing UV images. Hence, in the embodiment of fig. 11, two consecutively or simultaneously captured images require recording.

For a consecutive recording, an illumination of the object 23 during acquisition of the two consecutive images requires synchronizing two image exposure times of the two camera sensors, including a first camera sensor and a second camera sensor. The synchronization for a time multiplexing of image capturing works perfectly if the camera sensors and the object 23 are static, and therefore not moving in space.

In case of utilizing camera sensors with high recording frame rates, the camera sensors and the object 23 need not to be entirely static, and even a slow movement of the object 23 and the camera sensors yields sufficient results for generating the training information. Hence, a cost effective solution for minimizing the influence of labeling by the physical marker device 43 on the visual appearance of the object 23 is available. Therefore, the learned model reliably achieves good classification results on new images in which the physical marker device 43 is not present, avoiding the scenario that during training the model using the training information, the model learns detecting the physical marker device 43 instead of detecting the region of interest 44.

Fig. 12 illustrates a seventh example for a physical marker device 45 with an annular body.

The physical marker device 45 has a ring-like structure, in which the annular body 45.1 of the physical marker device 45 encircles an opening 46. The size of the opening 46 defines the location and the size of the region of interest 22 when the physical marker device 45 is attached to the surface 24 of the object 23.

For fixating the physical marker device 45 at the surface 23, the annular body 45.1 of the physical marker device 45 may have at least one level surface 47 providing a flat plane for applying an adhesive for gluing the physical marker device 45 to the surface 24 of the object 23.

The physical marker device 45 defines a region of interest 22 having a circular shape surrounding the region of interest 22.

Alternatively, the body of the physical marker device may have a closed shape of a different form, e.g. an oval, rectangular, or polygonal instead of the annular shape of the annular body 45.1 of fig.10.

The annular body 45.1 of the physical marker device 45 may consist of a flexible material enabling the user to adapt the physical marker device 45 to surfaces 24, which deviate from a plane surface.

The example of the annular body 45.1 of the physical marker device 45 consisting of the flexible material enables the user to adapt the physical marker device 45 to define regions of interest that are not entirely circular.

Fig. 13 illustrates an eighth example for a physical marker device 48.

The physical marker device 48 includes plural elementary physical marker devices 48.1 that are linked by telescopic connections 48.2 between each pair of the elementary physical marker devices 48.1. The six elementary physical marker devices 48.1 and the telescopic connections 48.2 form a closed structure that surrounds an area 49. The area 49 corresponds to the region of interest 22 when the physical marker device 48 is attached to the surface 24 of the object 23.

The telescopic connections 48.2 of the physical marker device 48 depicted in fig. 11 comprise plural connection elements 48.21, 48.22, 48.23 that enable the user to vary the length of the telescopic connections 48.2 as indicated by the arrows in partial view A.

By varying the length of the telescopic connections 48.2 between the adjacent pairs of elementary physical marker devices 48.1, the user may vary a distance between the elementary physical marker devices 48.1 of the physical marker device 48. This has the effect of changing the shape of the arrangement of the plural elementary physical marker devices 48.1, and the shape and the size of the area 49 that defines the region of interest 22 on the surface 24 of the physical device 23.

The elementary physical marker devices 48.1 of fig. 13 each include a magnetic layer 48.11 as an example of the fastener means for fixating the elementary physical marker devices 48.1 at metallic surfaces.

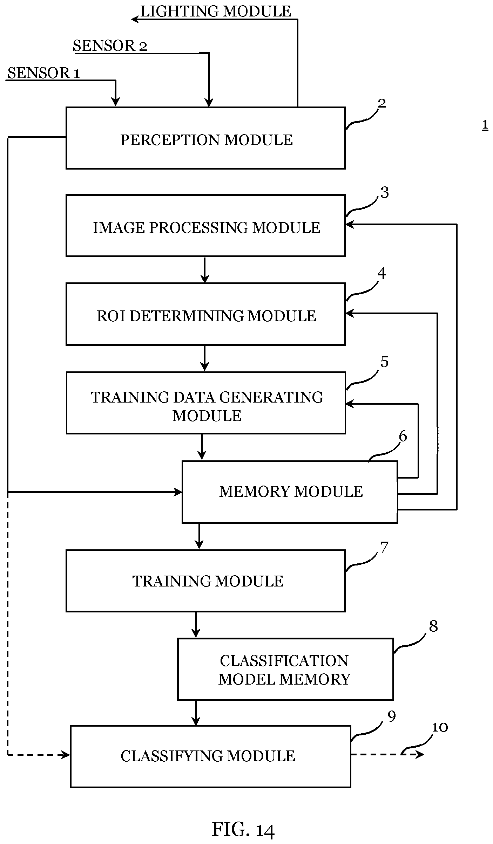

Fig. 14 provides a simplified block diagram illustrating the architecture of a system 1 for generating detection information for detecting an object representation in an image of an embodiment.

The system 1 for generating detection information for detecting an object representation in an image comprises at least one physical marker device applied to a surface 24 of a object 23.

The system 1 includes at least one camera sensor configured to acquire a plurality of images of the surface 24 of the object 23. The system of fig. 14 includes a first camera sensor (sensor1) and a second camera sensor (sensor2).

The first camera sensor captures images of the object 23 in the visual spectrum.

The second camera sensor captures images of the object 23 in the spectrum that is invisible to the human observer. The second camera sensor may be used in embodiments, which utilize physical marker devices that are not visible in the electromagnetic spectrum of visible light.

The system 1 further includes data storage (memory) configured to store information and data. For example, the memory module 6 of the system 1 stores the plurality of images acquired by a perception module 2 of the system 1. An image-processing module 3 of the system 1 obtains the images obtained by the perception module 2 and stored in the memory module 6 and performs image pre-processing.

A ROI-determining module 4 of the system 1 then detects the at least one physical marker device in at least one image of the acquired and pre-processed plurality of images. The ROI-determining module 4 then computes, for each detected at least one physical marker device, a region of interest (ROI) including a local object feature representation in the image based on predetermined relative location information associated with the detected physical marker device. The ROI-determining module 4 then generates mask information based on the computed region of interest.

A training-data-generating module 5 of the system 1 then generates training information including the generated mask information associated with the at least one image and stores generated training information in the memory module 6.

A training module 7 then generates classification information for classifying the local feature 26 in new images by training a classification model using the stored training information in the memory module 6. The training module 7 then stores the trained classification model in a classification model memory 8.

A classification module 9 utilizes the trained classification model stored in the classification-model memory 8 for detecting, classifying, segmenting or tracking of local object feature representations in new images acquired by the perception module 2, and generates and outputs a classification signal 10 based on the detected, classified, segmented or tracked local object feature representations in the new images.

The system 1 may implement the modules, e.g., the perception module 2, the image-processing module 3, the ROI-determining module 4, the training-data-generating module 5, the training module 7 and the classifying module 9 including in software modules running on a processor (processing hardware).

The processing hardware may include a plurality of processors, microprocessors, signal processors and microcontrollers. The memory module 6 and the classification-model memory 8 may be implemented using same of different data storage devices, or at least partially distributed in data storage devices and servers located at different sites and connected via a communication network.

All steps which are performed by the various entities described in the present disclosure as well as the functionalities described to be performed by the various entities are intended to mean that the respective entity is adapted to or configured to perform the respective steps and functionalities.

The functions of the modules discussed in the description may be implemented using discrete electric hardware circuits. Alternatively or additionally, at least some of the functions may be implemented in software in combination with at least one programmed microprocessor, general purpose computer, application specific integrated circuit (ASIC), or digital signal processor.

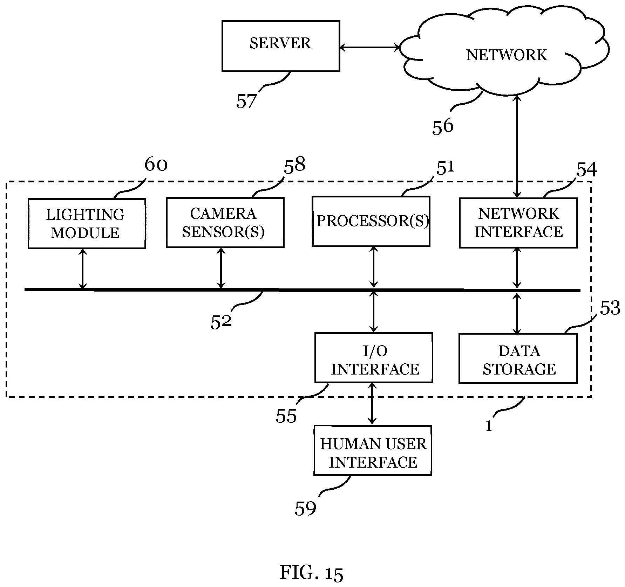

Fig. 15 displays an example on a high level of abstraction of an architecture of computer hardware elements suitable for running an embodiment of the computer-implemented method, and illustrates in particular interfaces to further hardware elements useful for understanding elements of the embodiments.

The system 50 of fig. 8 includes a processor 51, a data storage 53 (memory 53), an input/output interface 55, and a network interface 54, which communicate via a data bus 52.

The input/output interface 55 provides a capability to output information via visual or audible signals to a human user. The input/output interface 55 also provides the capability to obtain information and commands from the human user.

The input/output interface 55 is an interface for connecting input/output devices including, but not limited to keyboards, mouse, pointing devices, displays, microphones, loudspeakers or a combination thereof.

The processor 51 may be any type of controller or processor, and may even be embodied as one or more processors 51 adapted to perform the functionality discussed herein. The term processor 51 may encompass a single integrated circuit (IC), or may encompass a plurality of integrated circuits or other components connected, arranged or grouped together, such as controllers, microprocessors, digital signal processors (DSP), parallel processors, multiple core processors, custom ICs, application specific integrated circuits (ASIC), field programmable gate arrays (FPGAs), for example.

The processor 51 may in particular provide the hardware on which software implementing the modules and submodules of the system 1 discussed with reference to fig. 14 run.

The memory 53 may include a data repository or database, may be embodied in any number of forms, including within any computer or other machine-readable data storage medium, memory device or other storage or communication device for storage or communication of information, including, but not limited to, a memory IC, or memory portion of an integrated circuit, e.g., a resident memory within a or processor 51, whether volatile or non-volatile, whether removable or non-removable.

The memory 53 may be adapted to store various look up tables, parameters, coefficients, other information and data, programs or instructions of the software of the present disclosure, and other types of tables such as database tables. The memory 53 in particular may store the memory module 6 and the classification memory module 8 of the system 1 discussed with reference to fig. 14.

The processor 51 is programmed, using software and data structures of the disclosed computer-implemented method, for example, to perform the methodology of the present disclosure. Consequentially, the system 1 and the computer-implemented method of the present invention may be embodied as software, which provides such programming or other instructions, such as a set of instructions and/or metadata embodied within a computer readable medium, discussed above.

The camera sensor 58 may form part of the system 1. The camera sensor 58 may include a single camera sensor or plural camera sensors, in particular the first camera sensor and the second camera sensor.

The camera sensor 58 may be connected with the system 1 via the network interface 54 instead of being directly connected to the data bus 52.

A lighting module 60 may form part of the system 1 or be connected with the system 1 via the network interface 54 instead of being directly connected to the data bus 52. The lighting module 60 emits light in a specific portion of the electromagnetic spectrum for illuminating the physical marker device in the embodiment, e.g., using invisible ink, in which the physical marker device is visible to the camera sensor 58 only when illuminated in the specific portion of the electromagnetic spectrum,

The network interface 54 provides the system 1 with the capability to link to external data sources, e.g. at least one server 57 via a communication network 56. The network interface 54 in particular enables to implement the system 1 in a spatially distributed manner by performing at least some of the individual method steps at least in part remote from the system 1, or storing data remote from the system 1. All steps which are performed by the various entities described in the present disclosure as well as the functionalities described to be performed by the various entities are intended to mean that the respective entity is adapted to or configured to perform the respective steps and functionalities.

The functions of the modules discussed in the description may be implemented using discrete electric hardware circuits. Alternatively or additionally at least some of the functions may be implemented in software in combination with a programmed microprocessor, a general-purpose computer, using an application specific integrated circuit (ASIC), or one or more digital signal processors.

In the claims as well as in the description the word "comprising" does not exclude the presence of other elements or steps.

The indefinite article "a" or "an" does not exclude a plurality.

A single element or module may fulfill the functions of several entities or items recited in the claims.

The invention defined in the attached claims may combine features described in the discussion of specific embodiments and depicted in the figures.

## Claims

1. Method for generating image data for generating training information for an automated image analysis related to a local feature in an image, the method comprising steps of
applying at least one physical marker device (21, 25, 27, 28, 29, 30, 31, 32, 43, 45, 48) adjacent to the local feature (26) of an object (23); and
acquiring, with at least one camera sensor (sensor1, sensor2), a plurality of images of the object (23) and storing the plurality of images.

2. Method according to claim 1, wherein the method further comprises
applying the at least one physical marker device (21, 25, 27, 28, 29, 30, 31, 32, 43, 45, 48) adjacent to the local feature (26) on the surface (24) of the object (23).

3. Method according to claim 1 or 2, wherein
the physical marker device (21, 25, 27, 31, 32, 43, 45, 48) comprises an AR marker or a QR marker arranged on a carrier material, and/or
the carrier material consists of a flexible material, in particular a sheet of paper or a plastic plate.

4. Method according to any one of the preceding claims, wherein
the at least one physical marker device (45) has an annular structure, in particular
wherein a surface the at least one physical marker device (45) has a specific color or a specific pattern, in particular a specific dot pattern.

5. Method according to any one of the preceding claims, wherein
the at least one physical marker device (21, 25, 27, 31, 32, 43, 45, 48) includes a fastener means for attaching the at least one physical marker device (21, 25, 27, 31, 32, 43, 45, 48) on a surface (24) of the object (23).

6. Method according to claim 5, wherein
the fastener means includes at least one of an adhesive layer, a removable glue, a magnet (48.11), a suction cup, and a clip device.

7. Method according to any one of the preceding claims, wherein
the at least one physical marker device (48) includes plural physical marker devices (48.1) arranged in a pattern on the surface (24) of the object (23) that define a region of interest (22, 44) in at least one image of the plurality of images.

8. Method according to any one of the preceding claims, wherein
the at least one physical marker device (43) comprises a pattern of invisible ink,
wherein the invisible ink includes UV light-fluorescent material, NIR-reflecting material, material reflecting light of a predetermined polarization, or material reflecting electromagnetic waves in a predetermined frequency band.

9. Method according to any one of the preceding claims, wherein
the physical marker device includes at least one body part of a body of the user, in particular at least one finger (28, 30) or a hand (29), arranged in a particular gesture.

10. Method according to any of the preceding claims, wherein
the at least one physical marker device (21, 25, 27, 31, 32, 43, 45, 48) is of one type of a plurality of types of physical marker devices (21, 25, 27, 31, 32, 43, 45, 48) that differ by a size of the physical marker devices (21, 25, 27, 31, 32, 43, 45, 48),
wherein the size of the at least one physical marker device (21, 25, 27, 31, 32, 43, 45, 48) defines a size of a region of interest (22, 44) in at least one image of the plurality of images.

11. Method according to claim 10, wherein
each of the plurality of types of physical marker devices (21, 25, 27, 31, 32, 43, 45, 48) is associated with one of a positive classification of the of the region of interest (22, 44), a negative classification of the region of interest (22, 44), and a classification confidence of a user applying the at least one physical marker device (21, 25, 27, 31, 32, 43, 45, 48).

12. Method according to any of the preceding claims, wherein
the at least one physical marker device (21, 25, 27, 31, 32, 43, 45, 48) comprises an occluding means for at least in part visually occluding the physical marker device (21, 25, 27, 31, 32, 43, 45, 48).

13. Method according to any of the preceding claims, wherein
the method includes applying the at least one physical marker device (21, 25, 27, 31, 32, 43, 45, 48) adjacent to the local feature (26) of the object (23) in a predetermined in-plane angle relative to an orientation of an image-plane of the at least one camera sensor (sensori, sensor2),
wherein the predetermined in-plane angle encodes a degree of membership of the local feature (26) to a particular class.

14. Method for generating classification information for an automated image analysis related to a local feature (26) of an object (23) in an image, the method comprising steps of
obtaining a plurality of images of the object (23);
detecting at least one physical marker device (21, 25, 27, 28, 29, 30, 31, 32, 43, 45, 48) applied adjacent to the local feature (26) of the object (23) in at least one image of the acquired plurality of images;
computing, for each detected at least one physical marker device (21, 25, 27, 28, 29, 30, 31, 32, 43, 45, 48), a region of interest (22, 44) in the at least one image based on predetermined relative location information associated with the at least one physical marker device (21, 25, 27, 28, 29, 30, 31, 32, 43, 45, 48);
generating mask information based on the computed region of interest (22, 44) and storing the generated mask information associated with the at least one image as training information; and
generating classification information for the automated image analysis related to the local feature (26) by training a model using the stored training information.

15. Method according to claim 14, wherein
detecting the at least one physical marker device (21, 25, 27, 31, 32, 43, 45, 48) includes detecting specific patterns in the plurality of images based on pre-learned computer vision models of the at least one physical marker device (21, 25, 27, 31, 32, 43, 45, 48).

16. Method according to one of claim, 14 and 15 wherein
the method comprises plural application modes, and,
when operating in a first application mode, the at least one physical marker device (21, 25, 27, 31, 32, 43, 45, 48) is associated with a region of interest (22, 44) with a positive example of the local feature (26), and the other regions of the image denote regions of interest (21, 25, 27, 31, 32, 43, 45, 48) with negative examples the local feature (26), or,
when operating in a second application mode, constraining a sensor view of a camera sensor (sensori, sensor2) for acquiring the plurality of images to a view that includes only the regions of interest (22, 44) in the plurality of images, or covering other regions than the regions of interest (22, 44) to inhibit acquiring image information therefrom.

17. Method according to one of claims 14 to 16, wherein the method comprises
displaying, on a screen of a handheld device or a wearable augmented reality/virtual reality device, the at least one region of interest associated with the detected at least one physical marker device (21, 25, 27, 28, 29, 30, 31, 32, 43, 45, 48), online during training the model, and
acquiring a user input from the user, via a human machine interface, including a classification for association with the displayed region of interest (22, 44), or for terminating processing in case of reaching a predetermined classification quality.

18. Method according to one of claims 14 to 17, wherein the method comprises
verifying the trained model by applying the trained model on the stored training information,
determining, whether a positive classification of the regions of interest (22, 44) occurred outside of areas in the plurality of images associated with the detected physical marker devices (21, 25, 27, 28, 29, 30, 31, 32, 43, 45, 48), and,
in case of determining that the positive classification of the regions of interest (22, 44) occurred outside of areas in the plurality of images associated with the detected physical marker devices (21, 25, 27, 28, 29, 30, 31, 32, 43, 45, 48),
performing at least one of
communicating the determined positive classification of the regions of interest (22, 44) that occurred outside the areas in the images associated with the detected physical marker devices (21, 25, 27, 28, 29, 30, 31, 32, 43, 45, 48) via the human-machine interface to a user,
executing the method for generating new training information, and
generating new classification information by further training the model using the stored training information.

19. Method according to one of claims 14 to 18, wherein the method comprises
generating a new mask information based on the at least one image including a visually modified representation of the detected at least one physical marker device (21, 25, 27, 28, 29, 30, 31, 32, 43, 45, 48), and
storing the generated new mask information associated with the at least one image as further training information.

20. System for generating image data for generating training information for an automated image analysis related to a local feature in an image, the system comprising
at least one physical marker device (21, 25, 27, 28, 29, 30, 31, 32, 43, 45, 48) applied adjacent to the local feature (26) of an object (23);
at least one camera sensor (sensori, sensor2) configured to acquire a plurality of images of the object (23); and
a memory (6) configured to store the plurality of images.

21. System for generating classification information for an automated image analysis related to a local feature (26) of an object (23) in an image, the system comprising
a processor (51) configured to acquire a plurality of images of the object (23);
the processor is further configured to detect the at least one physical marker device (21, 25, 27, 28, 29, 30, 31, 32, 43, 45, 48) in at least one image of the acquired plurality of images,
to compute, for each detected at least one physical marker device (21, 25, 27, 28, 29, 30, 31, 32, 43, 45, 48), a region of interest (22, 44) in the at least one image based on predetermined relative location information associated with the physical marker device (21, 25, 27, 28, 29, 30, 31, 32, 43, 45, 48),
to generate mask information based on the computed region of interest (22, 44), and
to store the generated mask information associated with the at least one image as training information in the memory (6, 8), and
to generate the classification information for the automated image analysis related to the local feature (26) by training a model using the stored training information.
